# EUROPEAN PATENT SPECIFICATION

(11) **EP 1 317 358 B1**
(45) Date of publication and mention of the grant of the patent: **26.05.2004**
(21) Application number: 01967317.7
(22) Date of filing: 07.09.2001
(51) Int. Cl.: B60K 1/00

(54) **A PLASTICS MATERIAL FUEL TANK FOR A MOTOR VEHICLE**
AUS KUNSTSTOFF GEFERTIGTER KRAFTSTOFFTANK FÜR EIN KRAFTFAHRZEUG
RESERVOIR A ESSENCE EN MATIERE PLASTIQUE DESTINE A UN VEHICULE A MOTEUR

(30) Priority: 11.09.2000 IT TO20000854
(43) Date of publication of application: 11.06.2003
(73) Proprietor: FIAT AUTO S.p.A., 10135 Torino (IT)
(72) Inventor: BRUNACCI, Giuseppe, I-10142 Torino (IT)
(74) Representative: Quinterno, Giuseppe
(86) International application number: PCT/EP2001/010341
(87) International publication number: WO 2002/020295

(56) References cited:
- EP-A- 0 064 310
- EP-A- 0 548 750
- EP-A- 0 619 174
- DE-A- 19 627 742
- US-A- 4 435 240
- US-A- 4 453 564

## Description

The present invention relates to a plastics material fuel tank for a motor vehicle.

In a first method used in the art, motor vehicle fuel tanks are currently manufactured in one piece by blow moulding. This method, however, involves technical problems, with the manufacture of accessory elements, such as anti-surge baffles, attachments for the connection of tubes and the like.

Such problems can be overcome by a known method which involves injection moulding the tanks in two half-shells and then joining them together. This second method has the potential to cut costs significantly. A fuel tank in accordance with the preamble of claim 1 is know from US-A-4 453 564, wherein only a smaller part of the joining edges or flanges are in a concavity in the tank.

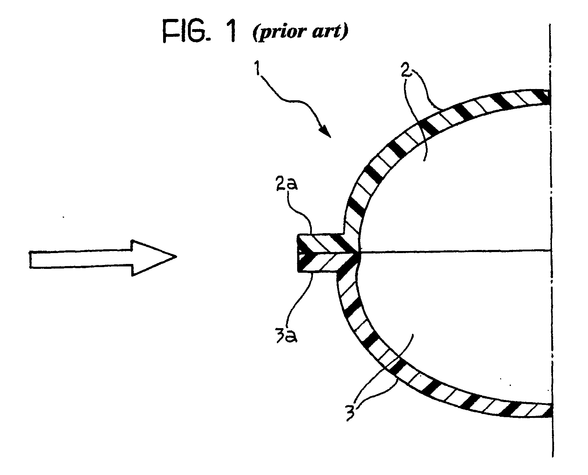

Figure 1 of the appended drawings is a partial and schematic sectional view of a fuel tank 1 for a motor vehicle which comprises two half-shells 2 and 3 moulded from plastics material and joined together along respective juxtaposed flanges or edges 2a, 3a.

The prior art tanks illustrated in Figure 1 have the disadvantage of low resistance to impact along the line where the two half-shells are joined, it being necessary to take into account that this region is directly exposed to impact and that the perimeter edge joining the two half-shells is very rigid.

The object of the present invention is therefore to provide a fuel tank for a motor vehicle which comprises two half-shells moulded from plastics material which offers highly reliable resistance to impact.

This and other objects are achieved according to the invention by providing a fuel tank of the aforesaid type, characterised in that the said half-shells are shaped in such a way that their adjoining edges or flanges are in a concavity in the tank.

Thanks to this characteristic, the junction of the two half-shells is not directly exposed to stress in the case of an impact.

Further characteristics and advantages of the invention will become apparent from the detailed description which follows, provided purely by way of non-limitative example, with reference to the appended drawings, in which:
Figure 1, already described, is a sectioned partial view of a tank manufactured according to the prior art; and
Figure 2 is a sectioned partial view of a tank manufactured according to the present invention.

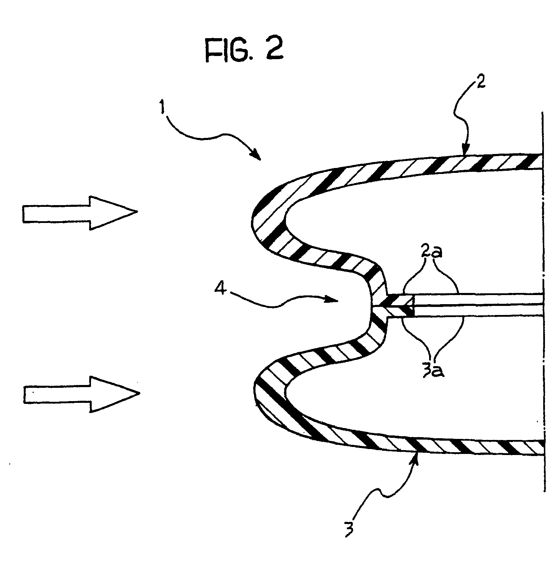

With reference to Figure 2, a fuel tank 1 according to the invention for a motor vehicle comprises two half-shells 2 and 3 moulded from plastics material, by injection moulding for example, and joined together along respective edges or flanges 2a, 3a.

The half-shells 2 and 3 of the tank of Figure 2 are shaped in such a way that the joining edges or flanges 2a, 3a are in a concavity 4 in the tank.

For preference, the joining edges or flanges 2a, 3a of the two half-shells 2 and 3 extend inwardly of the tank 1.

These edges or flanges can be welded or glued together or joined by a bead of molten material.

If the half-shells are welded, this can be carried out by one of several known methods (by laser, ultrasound, hot-knife welding or the like).

Naturally, the principle of the invention remaining unchanged, embodiments and manufacturing details may vary widely from those described and illustrated purely by way of non-limitative example, without thereby departing from the scope of the invention, as claimed in the appended Claims.

## Claims

1. A fuel tank (1) for a motor vehicle which comprises two half-shells (2, 3) moulded from plastics material and joined together along respective edges or flanges (2a, 3a); the tank being **characterised in that** the said half-shells (2, 3) are shaped in such a way that their joining edges or flanges (2a, 3a) are in a concavity (4) in the tank (1).

2. A tank according to Claim 1, **characterised in that** the said joining edges or flanges (2a, 3a) are welded together.

3. A tank according to Claim 1 in which the said joining edges or flanges (2a, 3a) are glued together.

4. A tank according to Claim 1, in which the said joining edges or flanges (2a, 3a) are joined by an applied bead of molten material.

5. A tank according to any preceding Claim, **characterised in that** the said joining edges or flanges (2a, 3a) of the two half-shells (2, 3) extend inwardly of the tank (1).

## Patentansprüche

1. Kraftstofftank (1) für ein Kraftfahrzeug, welcher zwei Halbschalen (2, 3) umfasst, die aus einem Kunststoffmaterial geformt und entlang entsprechender Kanten oder Flansche (2a, 3a) aneinandergefügt sind; wobei der Tank **dadurch gekennzeichnet ist, dass** die Halbschalen (2, 3) solcherart geformt sind, dass ihre Anschlusskanten oder -flansche (2a, 3a) in einer Höhlung (4) im Tank (1) liegen.

2. Tank gemäß Anspruch 1, **dadurch gekennzeichnet, dass** die Anschlusskanten oder -flansche (2a, 3a) zusammengeschweißt sind.

3. Tank gemäß Anspruch 1, wobei die Anschlusskanten oder -flansche (2a, 3a) zusammengeklebt sind.

4. Tank gemäß Anspruch 1, wobei die Anschlusskanten oder -flansche (2a, 3a) durch eine aufgebrachte Bördelung aus Schmelzmaterial zusammengefügt sind.

5. Tank gemäß jedem vorhergehenden Anspruch, **dadurch gekennzeichnet, dass** sich die Anschlusskanten oder -flansche (2a, 3a) der beiden Halbschalen (2, 3) im Inneren des Tanks (1) erstrecken.

## Revendications

1. Réservoir de carburant (1) pour un véhicule à moteur qui comprend deux demi-coquilles (2, 3) moulées à partir de matière plastique et reliées ensemble le long de bords ou rebords respectifs (2a, 3a); le réservoir étant **caractérisé en ce que** lesdites demi-coquilles (2, 3) sont mises en forme d'une manière telle que leurs bords ou rebords de jonction (2a, 3a) sont dans une concavité (4) dans le réservoir (1).

2. Réservoir selon la revendication 1, **caractérisé en ce que** lesdits bords ou rebords de jonction (2a, 3 a) sont soudés ensemble.

3. Réservoir selon la revendication 1, dans lequel lesdits bords ou rebords de jonction (2a, 3a) sont collés ensemble.

4. Réservoir selon la revendication 1, dans lequel lesdits bords ou rebords de jonction (2a, 3a) sont reliés par un cordon de matière fondue appliqué.

5. Réservoir selon l'une quelconque des revendications précédentes, **caractérisé en ce que** lesdits bords ou rebords de jonction (2a, 3a) des deux demi-coquilles (2, 3) s'étendent vers l'intérieur du réservoir (1).
